# EUROPÄISCHE PATENTANMELDUNG

(11) **EP 2 808 502 A1**
(43) Veröffentlichungstag der Anmeldung: **03.12.2014**
(21) Anmeldenummer: 13170159.1
(22) Anmeldetag: 31.05.2013
(51) Int. Cl.: F01K 25/10, F02C 6/16, F17C 9/04, F25J 1/00

(54) **Anlage zur Speicherung von Energie in einem verflüssigten Prozessgas**

(71) Anmelder: Siemens Aktiengesellschaft, 80333 München (DE)
(72) Erfinder: Reznik, Daniel, Dr., 13503 Berlin (DE); Stiesdal, Henrik, 5000 Odense C (DK)

(57) **Zusammenfassung**

Die Erfindung betrifft eine Anlage zur Speicherung von Energie in einem verflüssigten Prozessgas, welches in einem Speicher (20) untergebracht ist. Über eine kryogene Pumpe (22) und einen nachgeschalteten Verdampfer (23a) kann das Prozessgas verdampft werden und über eine Turbine (24) in mechanische Energie für einen Generator (G₁) umgewandelt werden. Erfindungsgemäß ist vorgesehen, dass das Gas, welches aus der Turbine (24) kommt, in einem Brenner (25) noch einmal erhitzt wird und anschließend über die Turbinenstufe (26) einer Gasturbine entspannt wird. Hierdurch wird ein Generator (G₂) angetrieben. Die Turbinenstufe (26) kann vorteilhaft ohne eine Verdichterstufe betrieben werden, da das aus der Turbine (24) stammende Prozessgas noch einen genügenden Druck zum Betrieb der Turbinenstufe aufweist. Hierdurch kann der mechanische Verlust, der mit einer Verdichtung des Gases bei einer Gasturbine verbunden ist, vorteilhaft eingespart werden. Es ist möglich, überschüssige Energie aus der regenerativen Stromerzeugung in dem Speicher (20) zwischenzuspeichern und im Bedarfsfall über die erfindungsgemäße Anlage zurückzuwandeln.

## Beschreibung

Die Erfindung betrifft eine Anlage zur Speicherung von Energie in einem verflüssigten Prozessgas und zur Umwandlung dieser Energie in mechanische Energie. Diese Anlage weist einen Speicher auf, in dem das verflüssigte Prozessgas gespeichert werden kann, beispielsweise einen Tank. Weiterhin ist eine Flüssigkeitspumpe vorgesehen, die an den Speicher angeschlossen ist, d. h. fluidisch mit diesem verbunden ist. Der Flüssigkeitspumpe nachgeschaltet in einer Leitung ist ein Verdampfer für das verflüssigte Prozessgas. Dem Verdampfer nachgeschaltet ist eine als thermische Arbeitsmaschine geschaltete thermische Fluidenergiemaschine.

Die Begriffe Kraftmaschine und Arbeitsmaschine werden im Rahmen dieser Anmeldung so verwendet, dass eine Arbeitsmaschine mechanische Arbeit aufnimmt, um ihren Zweck zu erfüllen. Eine thermische Fluidenergie-Maschine, die als Arbeitsmaschine verwendet wird, wird somit als Verdichter oder als Kompressor verwendet. Demgegenüber verrichtet eine Kraftmaschine Arbeit, wobei eine thermische Fluidenergie-Maschine zur Verrichtung der Arbeit die im Arbeitsgas zur Verfügung stehende thermische Energie umwandelt. In diesem Fall wird die thermische Fluidenergie-Maschine also als Motor betrieben.

Der Begriff "thermische Fluidenergie-Maschine" bildet einen Oberbegriff von Maschinen, die einem Arbeitsfluid, im Zusammenhang mit dieser Anmeldung ein Arbeitsgas, thermische Energie entziehen oder diesem thermische Energie zuführen können. Unter thermischer Energie ist sowohl Wärmeenergie als auch Kälteenergie zu verstehen. Thermische Fluidenergie-Maschinen können beispielsweise als Kolbenmaschinen ausgeführt sein. Bevorzugt können auch hydrodynamische thermische Fluidenergie-Maschinen verwendet werden, deren Laufräder einen kontinuierlichen Fluss des Arbeitsgases erlauben. Vorzugsweise kommen axial wirkende Turbinen bzw. Verdichter zum Einsatz.

Eine Anlage zur Speicherung von Energie der eingangs angegebenen Art ist beispielsweise C. Knowlen et al., "High Efficiency Energy Conversion Systems for Liquid Nitrgen Automobiles", 1998, Society of Automotive Engineers, Incorporated zu entnehmen. Vorgesehen werden kann ein Speicher für beispielsweise flüssigen Stickstoff, welcher mit einer kryogenen Pumpe über einen Verdampfer verdampft wird. In einer thermischen Fluidenergiemaschine wird die in dem Prozessgas gespeicherte Energie in mechanische Energie umgewandelt.

Außerdem ist es aus I. Hadjipaschalis et al., "Overview of current and future energy storage technologies for electric power applications", Renewable and Sustainable Energy Reviews 13 (2009), pp. 1513 - 1522 bekannt, dass Gas als Speicher mittels eines Kompressors mit hohem Druck in unterirdischen Kavernen abgespeichert werden kann. Im Bedarfsfall kann dieses Gas über Turbinen wieder entspannt werden, wodurch ein Rückgewinnen an elektrischer Energie möglich ist. Für eine derartige Speicherung müssen allerdings die unterirdischen Druckräume zur Verfügung stehen, die nicht überall auf der Erde verfügbar sind.

Die Aufgabe der Erfindung besteht darin, eine Anlage zur Speicherung von Energie in einem verdichtetem Prozessgas und zur Umwandlung dieser Energie in mechanische Energie anzugeben, deren Einsatz von örtlichen Gegebenheiten unabhängig möglich ist und die einen hohen Wirkungsgrad verwirklicht.

Diese Aufgabe wird mit der eingangs angegebenen Anlage erfindungsgemäß dadurch gelöst, dass die Anlage außerdem Folgendes aufweist. Der Fluidenergiemaschine ist ein Brenner für das Prozessgas nachgestaltet, wobei das Prozessgas Sauerstoff enthält, welcher unter Zusatz eines Brennstoffs wie Methan oder Dieselkraftstoff verbrannt wird. Die hierbei entstehende Wärme ermöglicht es, das Gas unter Einsatz einer Turbinenstufe einer Gasturbine von dem Druckniveau, welches dieses nach Entspannung über die thermische Fluidenergiemaschine aufgewiesen hat, auf das Druckniveau der Umgebung bei gleichzeitiger Abkühlung zu entspannen. Hierbei kann vorteilhaft der Energieaufwand eingespart werden, der mit einem gewöhnlichen Betrieb einer Gasturbine durch Betreiben der Kompressorstufe erforderlich ist, da die Entspannung des Prozessgases durch die Fluidenergiemaschine so betrieben werden kann, dass sich das Prozessgas für den Betrieb der Turbinenstufe auf dem notwendigen Druckniveau befindet. Hierdurch ist insgesamt eine hohe Ausbeute der im Speicher gespeicherten Energie sowie der effiziente zusätzliche Einsatz eines fossilen Brennstoffs in der Turbinenstufe möglich. Weitere Vorteile bei dem Betrieb der erfindungsgemäßen Anlage entstehen dadurch, dass das Prozessgas (insbesondere Luft) durch Verflüssigung auf engem Raum gespeichert werden kann, so dass es ausreicht, einen thermisch isolierten druckfesten Flüssigkeitstank zur Verfügung zu stellen. Es entsteht daher keine Abhängigkeit von geologischen Gegebenheiten, wie dem Vorhandensein von unterirdischen Kavernen. Um das verflüssigte Gas auf ein höheres Druckniveau zu bringen, ist vorteilhaft kein großer Energieaufwand erforderlich, da das verflüssigte Prozessgas inkompressibel ist und auf einfachem Wege mittels einer kryogenen Pumpe verdichtet werden kann. Für die anschließende Verdampfung können Umgebungswärme oder gespeichertes Warmwasser aus dem Verflüssigungsprozess genutzt werden, die auf diesem Wege die thermodynamischen Prozesse zugänglich wird. Dies verbessert vorteilhaft den Wirkungsgrad des Prozesses genauso wie die Verdichtungsmöglichkeit mittels der kryogenen Pumpe.

Gemäß einer vorteilhaften Ausgestaltung der Erfindung ist vorgesehen, dass der Tubinenstufe ein Wärmetauscher nachgeschaltet ist, der die Abwärme der Turbinenstufe dem Prozessgas zwischen dem Verdampfer und der Fluidenergiemaschine zuführt. Auf diesem Weg wird die Abwärme der Turbinenstufe in dem Entladungsprozess des Speichers für eine Erwärmung des Prozessgases vor Entspannung in der Fluidenergiemaschine genutzt und bleibt dem System auf diese Weise erhalten. Dadurch wird vorteilhaft eine Verbesserung des Wirkungsgrades der Anlage beim Entladebetrieb erreicht.

Gemäß einer anderen Ausgestaltung der Erfindung ist vorgesehen, dass der Verdampfer eine Leitung für Umgebungsluft als Medium für den Wärmeaustausch aufweist und diese Leitung an eine von der Turbinenstufe kommende Leitung angeschlossen werden kann. Wird die Umgebungswärme im Wärmetauscher über die Umgebungsluft abgegeben, kühlt sich diese nämlich stark ab, und zwar auf Temperaturen von unter 0°C. Dies führt dazu, dass die in der Umgebungsluft enthaltende Feuchtigkeit ausfällt und aufgrund der geringen Temperatur zu einer Vereisung des Wärmetauschers führt. Erfindungsgemäß kann jedoch das von der Turbinenstufe kommende und noch erwärmte Prozessgas (Luft) für eine Enteisung des Wärmetauschers genutzt werden, indem mit dieser das Eis wieder aufgeschmolzen wird. Auf diesem Wege ist auch dauerhaft ein hoher Wirkungsgrad der Anlage gewährleistet. Alternativ ist auch eine Enteisung mit gespeicherter Wärme aus der Verflüssigung möglich.

Weiterhin kann vorteilhaft vorgesehen werden, dass die von der Turbinenstufe kommende Leitung mit einem Fernwärmesystem gekoppelt ist. Genauso kann die von dem Verdampfer kommende Leitung mit einem Fernkältesystem gekoppelt werden. Unter Fernwärmesystemen und Fernkältesystemen im Sinne der Anmeldung sind Systeme zu verstehen, die einen Transport von Wärme über ein bestimmtes Medium von einem Entstehungsort hin zu einem Verbrauchsort gewährleisten. Fernwärme wird beispielsweise zur Beheizung von Häusern verwendet. Ein Fernkältesystem kann zur Klimatisierung von Häusern im Sommer sowie zur Versorgung von Kühlhäusern Verwendung finden. Hierdurch werden die mit dem Betrieb der erfindungsgemäßen Anlage zwangsläufig verbundenen Energieverluste für eine externe Anwendung genutzt, wobei dort dann die benötigte Wärme oder Kälte nicht mehr erzeugt werden muss.

Besonders vorteilhaft ist es, wenn der Speicher mit einer Verflüssigungsanlage für Luft verbunden ist. Diese weist mindestens einen Verdichter für die Luft auf. Bevorzugt werden mehrere Verdichter kaskadenförmig hintereinander angeordnet, um die Luft stufenweise zu verdichten. Dies ist technisch einfacher realisierbar, und zwar mit hydrodynamischen Maschinen. Diese gewährleisten vorteilhaft einen hohen Mengendurchsatz an Luft und benötigen weniger Energie. Dem Verdichter oder den Verdichtern nachgeschaltet ist eine Kühlanordnung für die Luft, wobei bei einer kaskadenförmigen Anordnung von Verdichtern auch zwischen den Verdichtern eine Kühlung der Luft erfolgt. Die Kühlanordnung ist dazu geeignet, in der Luft die kryogenen Bedingungen herzustellen, bei denen sie Lufttemperaturen von weniger als -150°C erreicht. Dies kann beispielsweise dadurch erfolgen, dass zunächst ein Wärmetauscher mit der Umgebung gekoppelt wird. Außerdem wird ein Teil der verdichteten Luft aus dem Luftstrom abgespalten und über eine Turbine entspannt. Die hiermit verbundene Abkühlung kann genutzt werden, um den restlichen Luftstrom auf die erforderliche Temperatur hinab zu kühlen.

Weitere Einzelheiten der Erfindung werden nachfolgend anhand der Zeichnung beschrieben. Gleiche oder sich entsprechende Zeichnungselemente sind in den einzelnen Figuren jeweils mit den gleichen Bezugszeichen versehen und werden nur insoweit mehrfach erläutert, wie sich Unterschiede zwischen den einzelnen Figuren ergeben. Es zeigen:
- Figur 1: ein Ausführungsbeispiel für eine Verflüssigungsanlage für Luft, wie sie bei der erfindungsgemäßen Anlage zum Einsatz kommen kann.
- Figur 2: ein Ausführungsbeispiel der erfindungsgemäßen Anlage als Blockschaltbild und

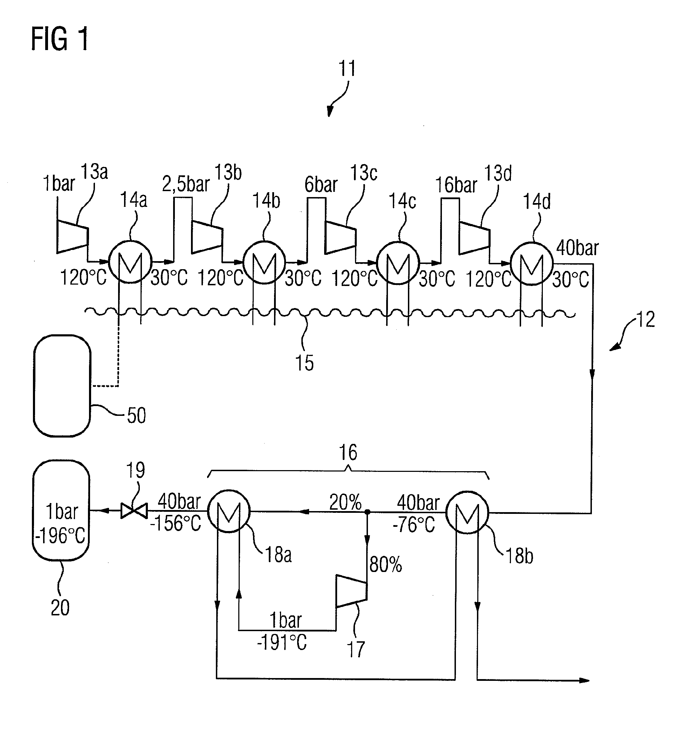

Eine Verflüssigungsanlage 11 gemäß Figur 1 weist einen Kreislauf 12 auf, in dem mehrere Verdichter 13a, 13b, 13c, 13d kaskadenförmig in Reihe geschaltet sind. Der erste Verdichter 13a verdichtet die Luft auf 2,5 bar, im zweiten Verdichter 13b wird die Luft auf 6 bar verdichtet, im nächsten Verdichter 13c auf 16 bar und im letzten Verdichter 13d auf 40 bar.

Dabei erwärmt sich die Luft jeweils auf ungefähr 120°C. Deswegen ist in dem Kreislauf 12 zwischen jedem der Verdichter ein Wärmetauscher 14a, 14b, 14c, 14d vorgesehen. Mit diesen gelingt eine Rückkühlung der Luft auf 30°C. Die Wärmetauscher können beispielsweise mit Wasser aus einem Fluss 15 gespeist werden. Alternativ kann die Wärme auch in einem Wasserspeicher 50 für eine spätere Verwendung aufbewahrt werden. Es ist aber auch möglich, dass das Fluid in den Wärmetauscher nach erfolgter Erwärmung einem Fernwärmesystem zur Verfügung gestellt wird (nicht dargestellt).

Nach der Verdichtung der Luft auf 40 bar wird diese einer Kühlanordnung 16 zugeführt. Herzstück dieser Kühlanordnung ist eine Turbine 17, mit der 80 % des Volumenstroms der Luft auf 1 bar entspannt werden. Hierbei kühlt sich die Luft auf - 191°C ab, so dass es möglich ist, diese abgekühlte Luft in einen Wärmetauscher 18a einzuspeisen, durch die die verbleibenden 20 % des Volumenstroms der Luft geleitet werden. Hierbei gelingt die Abkühlung der Luft auf -156°C. Nach Passieren der so abgekühlten Luft wird diese durch eine Drossel 19 entspannt und in einen Speicher 20 eingespeist, in dem ein Druck von 1 bar herrscht. Die Luft kühlt sich hierbei weiter ab und erreicht ein Niveau von -196°C. Bei diesen Bedingungen ist die Luft in den Speicher 20 verflüssigt. Die über die Turbine 17 entspannte Luft kann nach Passieren des Wärmetauschers 18a noch über einen weiteren Wärmetauscher 18b geleitet werden, der in dem Kreislauf 12 noch vor der Abzweigungsstelle zur Turbine 17 untergebracht ist. Mit Hilfe dieses Wärmetauschers 18b ist eine Vorkühlung der Luft auf -76°C möglich, so dass der zu bewältigende Temperaturunterschied im Wärmetauscher 18a geringer ausfällt. Anschließend kann die durch den Wärmetauscher 18b geleitere Luft noch einem Fernkältesystem zur Verfügung gestellt werden (nicht dargestellt), wobei dieses Fernkältesystem unabhängig von der Verflüssigungsanlage betrieben wird.

Die Verdichter 13a, 13b, 13c, 13d können durch Elektromotoren (nicht dargestellt) angetrieben werden, die im Falle einer Überproduktion regenerativer Energien angeworfen werden, um den erzeugten Stromüberschuss abzubauen. Hierbei wird der Speicher 20 aufgefüllt, wobei der Energieüberschuss dort in Form verflüssigter Luft gespeichert wird.

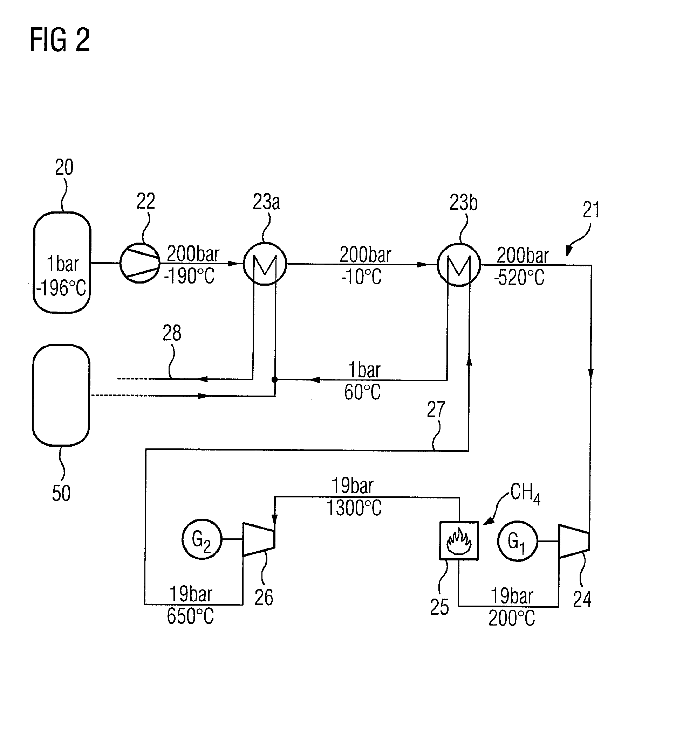

Wie Figur 2 zu entnehmen ist, kann dieser Speicher 20 im Bedarfsfall, d. h. bei einem Strommangel, wieder entleert werden. Dies erfolgt über einen Kreislauf 21, der an dem Speicher 20 angeschlossen ist. Die flüssige Luft gelangt durch eine kryogene Pumpe 22, die eine Druckerhöhung auf 200 bar bewerkstelligt, über einen Verdampfer 23a und einen Wärmetauscher 23b zu einer Fluidenergiemaschine 24, die als Turbine ausgeführt ist. In Verdampfer, Wärmetauscher 23a, 23b erfährt die Luft bei gleichbleibendem Druck von 200 bar eine Erwärmung, und zwar im Verdampfer 23a auf -10°C. Hierbei verdampft die Luft transkritisch. Unter Umständen kann zur Unterstützung der Verdampfung Heißwasser aus dem Wasserspeicher 50 genommen werden. Dieser ist vorstehend schon erwärmt worden. In dem Wärmetauscher 23b wird die Luft weiter aufgeheizt, und zwar auf 520°C. Durch die Entspannung in der Fluidenergiemaschine (Turbine) 24 wird die Luft auf 200°C abgekühlt und erreicht ein Druckniveau von 19 bar. Die Fluidenergiemaschine 24 treibt einen Generator G₁ an, mit dem elektrische Energie erzeugt wird. Das über die Fluidenergiemaschine 24 entspannte Gas wird einem Brenner 25 zugeführt, welcher mit Methan betrieben wird. In diesem erreicht die Verbrennungsluft eine Temperatur von 1300°C bei 19 bar. Die Verbrennungsluft wird eine Turbinenstufe 26 zugeführt und dort auf 1,1 bar entspannt. Nach der Entspannung weisen die Verbrennungsgase eine Temperatur von 650°C auf. Die Turbinenstufe 26 treibt einen Generator G₂ an. Ein Kompressorstufe, wie sonst bei Gasturbinen üblich, ist nicht erforderlich, da das Gas nach dem Verlassen der Fluidenergiemaschine 24 das erforderliche Druckniveau von 19 bar aufweist.

Die Verbrennungsgase aus der Turbinenstufe 26 gelangen über eine Leitung 27 in den Wärmetauscher 23b, wo Wärme an den Kreislauf in der bereits beschriebenen Weise abgegeben wird. Anschließend hat das Verbrennungsgas noch eine Temperatur von 60°C bei einem Druck von 1 bar. Diese Restwärme kann genutzt werden, um in den Verdampfer 23a eingespeist zu werden, und zwar zusammen mit der Umgebungsluft (diese Option entfällt bei der Verwendung des Wasserspeichers 50). Hierdurch wird eine Enteisung des Verdampfers 23a gewährleistet. Eine vom Verdampfer 23a kommende Leitung 28 kann in nicht dargestellter Weise zu einem Fernkältesystem führen.

## Patentansprüche

1. Anlage zur Speicherung von Energie in einem verflüssigten Prozessgas und zur Umwandlung dieser Energie in mechanische Energie, aufweisend
- einen Speicher (20) für das verflüssigte Prozessgas,
- eine Flüssigkeitspumpe (22), die an den Speicher (20) angeschlossen ist,
- einen der Flüssigkeitspumpe nachgeschalteten Verdampfer (23a) und
- eine dem Verdampfer (23a) nachgeschaltete, als Arbeitsmaschine geschaltete thermische Fluidenergiemaschine (24),
**dadurch gekennzeichnet,**
**dass** die Anlage außerdem aufweist:
- einen der Fluidenergiemaschine (24) nachgeschalteten Brenner (25) für das Prozessgas, wobei dieses Sauerstoff enthält und
- dem Brenner nachgeschaltet die Turbinenstufe (26) einer Gasturbine.

2. Anlage nach Anspruch 1,
**dadurch gekennzeichnet,**
**dass** der Turbinenstufe (26) ein Wärmetauscher (23b) nachgeschaltet ist, der die Abwärme der Turbinenstufe (26) dem Prozessgas zwischen dem Verdampfer (23a) und der Fluidenergiemaschine (24) zuführt.

3. Anlage nach einem der voranstehenden Ansprüche,
**dadurch gekennzeichnet,**
**dass** der Verdampfer (23a) mit Wärme aus der Umgebung gespeist wird.

4. Anlage nach Anspruch 3,
**dadurch gekennzeichnet,**
**dass** der Verdampfer (23a) eine Leitung (28) für Umgebungsluft als Medium für den Wärmeaustausch aufweist und diese Leitung (28) an eine von der Turbinenstufe kommende Leitung (27) angeschlossen werden kann.

5. Anlage nach einem der voranstehenden Ansprüche,
**dadurch gekennzeichnet,**
**dass** die von der Turbinenstufe (26) kommende Leitung (27) mit einem Fernwärmesystem gekoppelt ist.

6. Anlage nach einem der voranstehenden Ansprüche,
**dadurch gekennzeichnet,**
**dass** die von dem Verdampfer (23a) kommende Leitung (28) mit einem Fernkältesystem gekoppelt ist.

7. Anlage nach einem der voranstehenden Ansprüche,
**dadurch gekennzeichnet,**
**dass** der Speicher (20) mit einer Verflüssigungsanlage für Luft verbunden ist, aufweisend
- mindestens einen Verdichter (13a, 13b, 13c, 13d) für die Luft,
- dem Verdichter (13a, 13b, 13c, 13d) nachgeschaltet eine Kühlanordnung (16) für die Luft und
- dieser nachgeschaltet der Speicher (20)

8. Anlage nach einem der Ansprüche 1 bis 3,
**dadurch gekennzeichnet,**
**dass** ein Wärmespeicher (50), insbesondere ein Wasserspeicher, vorgesehen ist, der eine Leitung (28) mit Wärme versorgt, wobei die Leitung (28) zum Verdampfer (23a) führt.

9. Anlage nach Anspruch 8,
**dadurch gekennzeichnet,**
**dass** der Wärmespeicher (50) mit einem Wärmetauscher (14a, 14b, 14c, 14d) verbunden ist, der die bei der Luftverflüssigung entstehende Prozesswärme aufnimmt.
